# FASCICULE DE BREVET EUROPEEN

(11) **EP 1 801 004 B1**
(45) Date de publication et mention de la délivrance du brevet: **02.09.2009**
(21) Numéro de dépôt: 06126764.7
(22) Date de dépôt: 21.12.2006
(51) Int. Cl.: B62K 15/00

(54) **Vélo pliable**
Klapprad
Foldable bicycle

(30) Priorité: 21.12.2005 FR 0513047
(43) Date de publication de la demande: 27.06.2007
(73) Titulaire: Cycles Lapierre, 21000 Dijon (FR)
(72) Inventeur: Lapierre, Gilles, 21160, MARSANNAY LA COTE (FR); Antonot, Emmanuel, 21490, CLENAY (FR); Gribaudo, Rémi, 21000, DIJON (FR)
(74) Mandataire: Cabinet Plasseraud

(56) Documents cités:
- EP-A- 1 298 046
- WO-A-88/05394
- WO-A-20/04101350
- GB-A- 2 047 790
- GB-A- 2 289 874
- US-A- 4 892 190
- US-B1- 6 279 935

## Description

La présente invention concerne un vélo pliable apte à être plié et rangé, après retrait des roues, dans un sac sensiblement parallélépipédique.

Dans le domaine des cycles, on connaît bien des vélos pliables afin de limiter leur encombrement lorsqu'ils ne sont pas utilisés.

La plupart de ces vélos pliables sont constitués de petites roues et d'un cadre comportant un tube de selle vertical et un tube oblique muni dans sa partie centrale d'une articulation afin de plier le cadre suivant un axe vertical jusqu'à ce que la roue avant vienne au droit de la roue arrière.

De tels vélos pliables sont décrits notamment dans les brevets français FR 1 501565, FR 1 443 948, FR 2 711 110 et dans les brevets américains US 2003/234509 et US 5,836,602.

Ce type de vélo pliable est destiné à une utilisation urbaine et n'est pas adapté à la pratique sportive du vélo de route classique. Un vélo de route classique est constitué d'un cadre triangulaire et de deux roues de grand diamètre. On entend par des roues de grand diamètre des roues présentant un diamètre supérieur ou égal à 650mm.

Afin de permettre aux pratiquants du vélo de route de transporter leur vélo en avion, en train, etc... pour pratiquer leur sport sur leur lieu de vacances par exemple, on a déjà imaginé des vélos pliables présentant des caractéristiques de vélo de route en configuration déplié.

C'est le cas, par exemple, du brevet européen EP 1 298 046 qui décrit un cadre de bicyclette constitué de deux sections assemblés de façon amovible en utilisant d'une part un collier pour assemblés les deux parties du tube oblique du cadre et une tige de selle comme un élément de raccordement pour former une jonction du tube de selle et du tube dit horizontal.

Ce type de vélo pliable présente l'inconvénient de nécessiter un temps de montage et de démontage long ainsi qu'une certaine précision lors de la mise en place du collier pour joindre les deux jonctions du cadre. Par ailleurs, la jonction des deux sections du cadre par un collier constitue un point de faiblesse du cadre qui limite sa rigidité et qui est ressentie par les utilisateurs. De plus, ce type de jonction de deux sections du cadre ne permet pas de réaliser les sections de cadre dans des tubes légers en aluminium ou en scandium notamment, imposant ainsi de réaliser les sections dans des tubes lourds en acier.

On connaît d'autres types de vélos pliables dans lesquels la roue arrière est solidaire d'un bras dit arrière monté pivotant autour du boîtier de pédalier ; c'est le cas, par exemple, du brevet américain US 6,279,935, du brevet européen EP 1 298 046, de la demande de brevet international WO88/05394 ou du brevet anglais GB 2 296 224.

Tous ces vélos pliables présentent l'inconvénient de nécessiter des pièces amovibles de fixation susceptibles d'être égarées au cours du rangement et/ou du transport du vélo, rendant par la suite le vélo inutilisable.

L'un des buts de l'invention est donc de remédier à l'ensemble de ces inconvénients en procurant un vélo pliable de conception simple et peu onéreuse, présentant des caractéristiques similaires en terme de rigidité, de poids et de sensation pour le cycliste, aux caractéristiques d'un vélo classique de route ou tout terrain, facile à plier et déplier, tout en étant apte à être rangé après pliage dans un sac sensiblement parallélépipédique de faible encombrement.

A cet effet, et conformément à l'invention, il est proposé une bicyclette pliable du type comportant d'une part un châssis dit cadre portant un boîtier de pédalier ; ledit tube de fourche portant une fourche à l'extrémité inférieure de laquelle est solidarisé l'axe de la roue avant de direction et à l'extrémité supérieure de laquelle sont solidarisés des moyens de direction, et d'autre part un bras arrière solidaire du cadre et portant l'axe du moyeu d'une roue arrière motrice, d'un diamètre supérieur ou égal à 650 mm, le couple moteur étant transmis à la roue motrice par une chaîne s'étendant entre un pignon menant solidaire du cadre et un pignon mené solidaire de l'axe du moyeu de la roue motrice, le bras arrière étant constitué d'au moins deux bras dits horizontaux dont l'une des extrémités dite proximale est articulée au cadre et dont l'autre extrémité dite distale, portant l'axe du moyeu de la roue arrière motrice, est solidaire de l'une des extrémités de deux bras dits obliques arrières, l'autre extrémité dite proximale desdits bras obliques arrières étant munie de moyens de solidarisation mâles ou femelles aptes à coopérer avec des moyens de solidarisation femelles ou respectivement mâles du tube de selle ou du tube horizontal de manière à ce qu'un utilisateur puisse solidariser ou désolidariser le bras arrière du cadre ; ladite bicyclette est remarquable en ce que ledit bras arrière est articulé au cadre de telle manière qu'il soit apte à pivoters jusqu'à ce que l'extrémité distale des bras horizontaux du bras arrière s'étende entre les tubes oblique et horizontal du cadre et les moyens de solidarisation des bras obliques arrières, s'étendent entre le tube oblique du cadre et une droite passant par le boîtier de pédalier et l'extrémité inférieure de la fourche et en ce que les moyens de solidarisation consistent d'une part dans un axe formant tirant comprenant à ses extrémités libres respectivement un écrou et des moyens de serrage et de traction sous tension dudit tirant et d'autre part dans une gorge de section en forme de U.

On comprend bien que, contrairement aux bicyclettes de l'art antérieur, aucune pièce de fixation libre susceptible d'être égarée n'est nécessaire pour son pliage ou son dépliage. De plus, la bicyclette suivant l'invention peut être réalisée avec des tubes en aluminium ou en scandium particulièrement légers contrairement aux bicyclettes de l'art antérieur.

D'autres avantages et caractéristiques ressortiront mieux de la description qui va suivre de plusieurs variantes d'exécutions, données à titre d'exemples non limitatifs, du vélo pliable conforme à l'invention en référence aux dessins annexés sur lesquels :
- la figure 1 est une vue de côté du vélo pliable conforme à l'invention en position dépliée,
- la figure 2 est une vue en perspective des moyens d'articulation du bras arrière sur le boîtier de pédalier du vélo conforme à l'invention,
- la figure 3 est une vue en coupe longitudinale des moyens d'articulation représentés sur la figure 2,
- la figure 4 est une vue en perspective éclatée des moyens de solidarisation du bras arrière au tube de selle du vélo conforme à l'invention,
- la figure 5 est une vue de côté d'une variante d'exécution des moyens de solidarisation du bras arrière au tube de selle du vélo conforme à l'invention,
- la figure 6 est une vue de dessus de la variante d'exécution des moyens de solidarisation du bras arrière au tube de selle suivant l'invention représentés sur la figure 5,
- la figure 7 est une vue de côté des moyens de solidarisation du guidon sur la fourche du vélo conforme à l'invention,
- les figures 8 à 11 sont des vues de côté des différentes étapes de pliage du vélo conforme à l'invention,
- la figure 12 est une vue en perspective du vélo plié suivant l'invention,
- la figure 13 est une vue de côté du vélo plié représenté sur la figure 12 conforme à l'invention,
- la figure 14 est une vue en perspective du sac, en position fermée, apte à recevoir le vélo pliable conforme à l'invention,
- la figure 15 est une vue en perspective du sac, en position semi-ouverte, apte à recevoir le vélo pliable suivant l'invention,

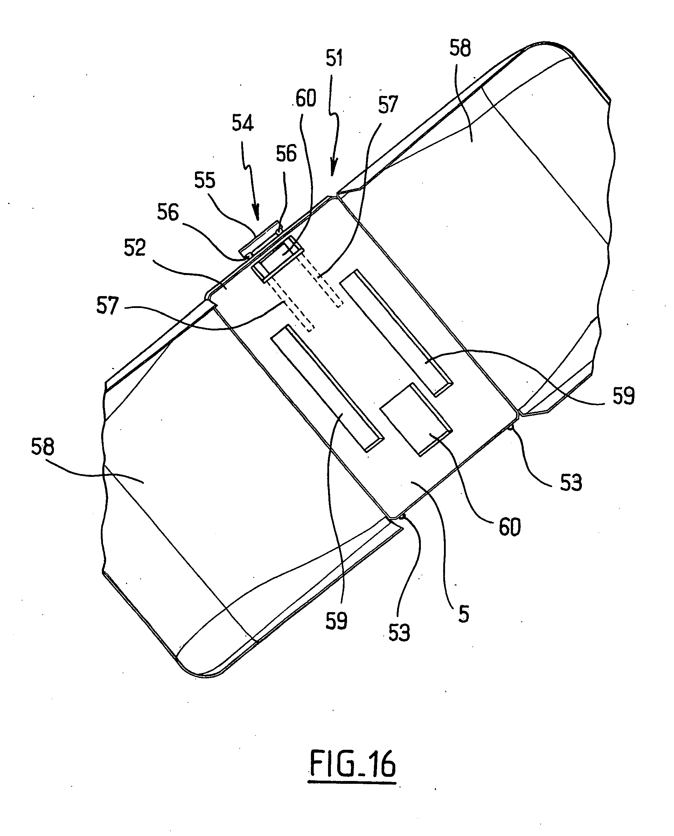

- la figure 16 est une vue de dessus du sac, représenté sur les figures 14 et 15, en position ouverte.

On décrira ci-après à titre d'exemple non limitatif une bicyclette pliable du type vélo tout terrain (VTT) ; néanmoins, la bicyclette pliable suivant l'invention pourrait être adaptée à un vélo dit de route ou similaire.

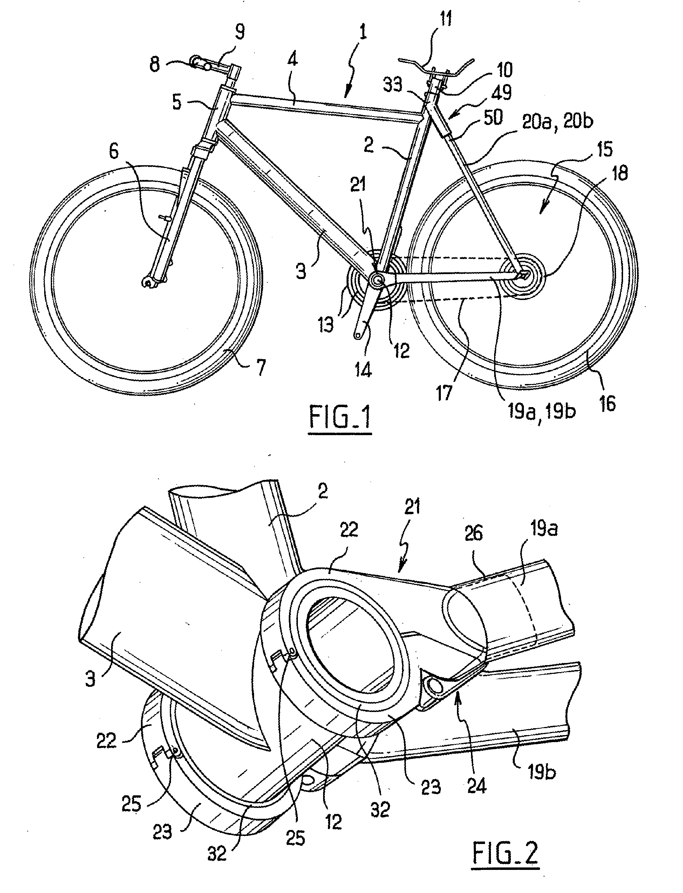

En référence à la figure 1, la bicyclette comprend un châssis 1 dit cadre triangulé constitué d'un tube de selle 2 globalement vertical, d'un tube oblique 3 assemblé par soudage à l'extrémité inférieure du tube de selle 2, un tube horizontal 4 dont les extrémités sont respectivement assemblées par soudage à l'extrémité supérieure du tube de selle 2 et à un tube de fourche 5 globalement vertical, le tube oblique 3 étant par ailleurs solidarisé audit tube de fourche 5 également par soudage. Ce tube de fourche 5 reçoit une fourche 6 du type télescopique portant à son extrémité inférieure l'axe du moyeu de la roue avant 7 de la bicyclette. Un guidon 8 est fixé de manière amovible, comme il sera détaillé plus loin, à l'extrémité libre d'une potence 9 solidaire de la fourche 5.

Le tube de selle 2 est apte à recevoir une tige de selle 10 comprenant à son extrémité supérieure une selle 11 sur laquelle prend position le cycliste.

Ledit tube de selle 2 comprend à son extrémité inférieure, c'est-à-dire à l'intersection du tube oblique 3 et du tube de selle 2, un boîtier de pédalier 12 portant de manière classique l'axe des pignons menant 13 communément appelés plateaux dont les axes de rotation sont coaxiaux. Des pédales 14 sont solidaires de l'axe des pignons menant 13 de part et d'autre du cadre 1 de la bicyclette.

Il va de soi que le cadre 1 de la bicyclette peut comporter un cadre dit « poutre » comportant uniquement un tube dit oblique 3 et un tube dit horizontal 4, les extrémités inférieure et supérieure du tube oblique 3 étant solidaire respectivement du boîtier de pédalier 12 et du tube de fourche 5. Une première extrémité du tube horizontal 3 porte la selle 11 et l'extrémité opposée est solidaire soit du tube de fourche 5 soit du tube horizontal 3.

De plus, la bicyclette peut comporter un cadre dit « poutre » comportant uniquement un tube dit oblique 3 et un tube dit de selle 2 ou comportant uniquement un tube dit de selle 2 et un tube horizontal 3 sans pour autant sortir du cadre de l'invention.

Ladite bicyclette comprend, par ailleurs, un bras arrière 15 solidaire du cadre 1 et portant l'axe du moyeu d'une roue arrière motrice 16, le couple moteur étant transmis à la roue motrice 16 par une chaîne 17, représentée en traits pointillés sur la figure 1, s'étendant entre un pignon menant 13 et un pignon mené 18 solidaire de l'axe du moyeu de la roue motrice 16. Le bras arrière 15 est constitué d'au moins deux bras dits horizontaux 19a, 19b, lesdits bras 19a et 19b s'étendant globalement parallèlement de part et d'autre du plan sagittal du cadre 1, dont l'une des extrémités dite proximale est articulée au cadre 1. L'autre extrémité dite distale desdits bras horizontaux porte l'axe du moyeu de la roue arrière motrice 16 et est solidaire de l'une des extrémités dite distale de deux bras dits obliques arrières 20a, 20b. L'autre extrémité dite proximale desdits bras obliques arrières 20a, 20b est munie de moyens de solidarisation mâles ou femelles aptes à coopérer avec des moyens de solidarisation femelles ou respectivement mâles du tube de selle 2 ou du tube horizontal 3 de manière à ce qu'un utilisateur puisse solidariser ou désolidariser le bras arrière 15 du cadre 1 sans utiliser de pièce de fixation libre comme il sera détaillé plus loin.

Les différents tubes constituant le cadre 1 et le bras arrière 15 sont avantageusement réalisés en aluminium ou en scandium afin que la bicyclette soit légère tout en étant rigide ; toutefois, il est bien évident que lesdits tubes pourront être réalisés dans un matériau plus lourd tel que de l'acier sans pour autant sortir du cadre de l'invention.

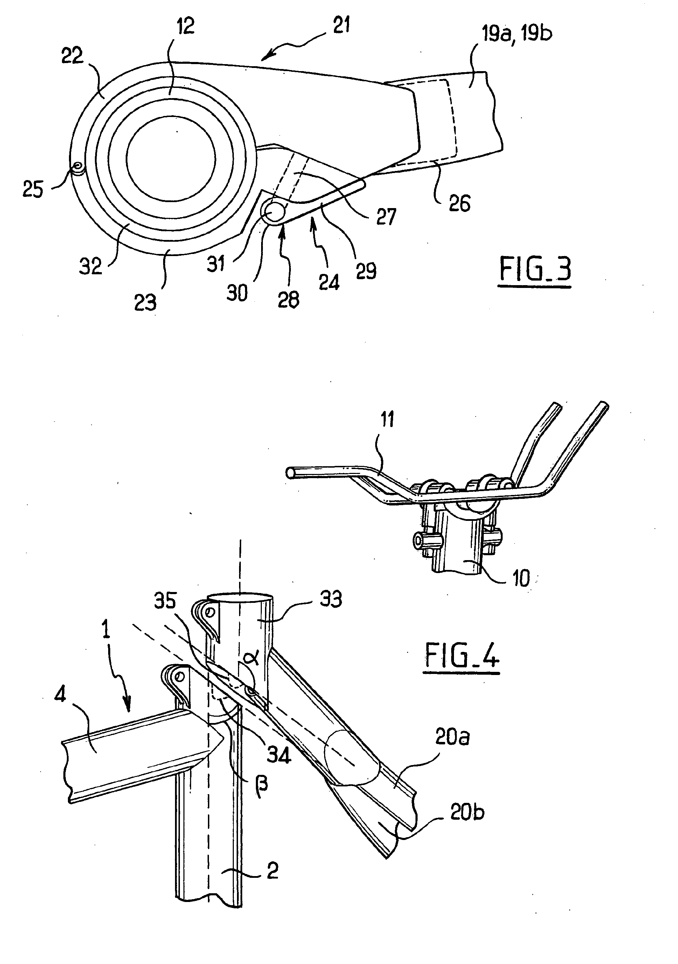

De manière particulièrement avantageuse, en référence aux figures 1 à 3, chaque bras horizontal 19a, 19b du bras arrière 15 est monté pivotant autour de l'axe du boîtier de pédalier 12 positionné à l'extrémité inférieure du tube de selle 2 et du tube oblique 3. A cet effet, chaque bras horizontal 19a, 19b du bras arrière 15 comporte des moyens d'articulation 21 constitués d'un mors fixe 22 hémi-annulaire à l'extrémité libre duquel est articulé un mors mobile 23 hémi-annulaire muni de moyens de fixation 24 dudit mors mobile 22 au mors fixe 23. Le mors mobile 23 est articulé au mors fixe autour d'un axe 25 s'étendant parallèlement à l'axe du boîtier de pédalier 12 lorsque les moyens d'articulation 21 sont solidarisés audit boîtier de pédalier 12. Chaque mors fixe 22 comporte une cheville 26, représentée en traits pointillés sur les figures 2 et 3, sur laquelle est apte à venir s'emboîter le bras horizontal 19a ou 19b du bras arrière 15, chaque bras horizontal 19a, 19b présentant une extrémité proximale creuse de section correspondant à la section de la cheville 26. On notera qu'une telle structure permet un montage aisé du bras arrière 15 sur le cadre 1 sans nécessiter de déformation des bras horizontaux 19a, 19b du bras arrière 15. Ainsi, lors du montage du bras arrière 15, les moyens d'articulation 21 constitués respectivement d'un mors fixe 22 et d'un mors mobile 23 sont préalablement ouvert puis positionnés de part et d'autre du plan sagittal du cadre 1 sur le boîtier de pédalier 12 ; Ensuite, le mors mobile 23 est fermé sur le mors fixe 22 et maintenu en position par des moyens de fixation 24 du mors fixe 22 par rapport au mors mobile 23.

Ces moyens de fixation 24, en référence à la figure 3, sont avantageusement constitués d'un tirant 27 s'étendant à l'extrémité libre du mors mobile 23, apte à venir en prise avec le mors fixe 22 et coopérant avec des moyens de serrage et de traction sous tension 28 dudit tirant 27 afin d'exercer une pression du mors mobile 23 sur le boîtier de pédalier 12 placé entre les mors fixe 22 et mobile 23. Lesdits moyens de serrage et de traction 28 sont constitués d'une manette 29 comportant une tête cylindrique 30 montée en rotation autour d'un axe 31 excentrique parallèle à l'axe de rotation 25 des mors 22, 23, ledit tirant 27 étant solidaire de la manette 29.

Il va de soi que les moyens de fixation 24 peuvent consister dans tout moyen de blocage équivalent bien connu de l'homme de l'art tel que par exemple une vis coopérant avec un trou taraudé pratiqué dans le mors fixe 22 et le mors mobile 23 sans sortir du cadre de l'invention.

Par ailleurs, afin de faciliter la rotation du bras arrière 15 autour du boîtier de pédalier 12, deux roulements annulaires 32 s'étendant de part et d'autre du cadre 1 est positionné sur ledit boîtier de pédalier 12 cylindrique qui fait saillie de part et d'autre du cadre les mors fixes 22 et mobiles 23 des moyens d'articulation 21 étant solidarisés par serrage sur lesdits roulements annulaires 32.

Selon une première variante d'exécution de la bicyclette conforme à l'invention, en référence aux figures 1 et 4, l'extrémité proximale des bras obliques arrières 20a, 20b est munie d'un segment de tube 33 de même section que la section du tube de selle 2 et dont le bord inférieur, en regard du bras horizontal 19a, 19b, est apte à prendre appui sur le bord supérieur du tube de selle 2 faisant saillie au dessus du tube horizontal 4 pour relier de manière amovible le bras arrière 15 au cadre 1 en insérant la tige de selle 10 dans le segment de tube 33 des bras obliques arrières 20a, 20b et le tube de selle 3. Le bord inférieur et le bord supérieur du segment de tube 33 des bras obliques arrière 20a, 20b s'étendent dans un plan globalement parallèle à l'axe longitudinal desdits bras obliques arrières 20a, 20b et respectivement dans un plan formant un angle α avec l'axe dudit segment de tube 33 des bras obliques arrières 20a, 20b. Par ailleurs, le bord supérieur du tube de selle 2 s'étend dans un plan incliné de haut en bas et d'avant en arrière en formant un angle β avec l'axe longitudinal dudit tube de selle 2.

Afin d'éviter tout cisaillement de la tige de selle 11, lors de l'utilisation de la bicyclette, et notamment lors du franchissement d'obstacles, le bord supérieur du tube de selle 2 comporte un creux 34, représenté en traits pointillés sur la figure 4, venant s'emboîter dans une saillie 35, également représenté en traits pointillés sur la figure 4, de forme correspondante du bord inférieur du segment de tube 33 des bras obliques arrières 20a, 20b.

Il va de soi que le bord supérieur du tube de selle 2 peut comporter une ou plusieurs saillies venant s'emboîter dans un ou plusieurs creux de forme correspondante du bord inférieur du segment de tube 33 des bras obliques arrières 20a, 20b sans pour autant sortir du cadre de l'invention.

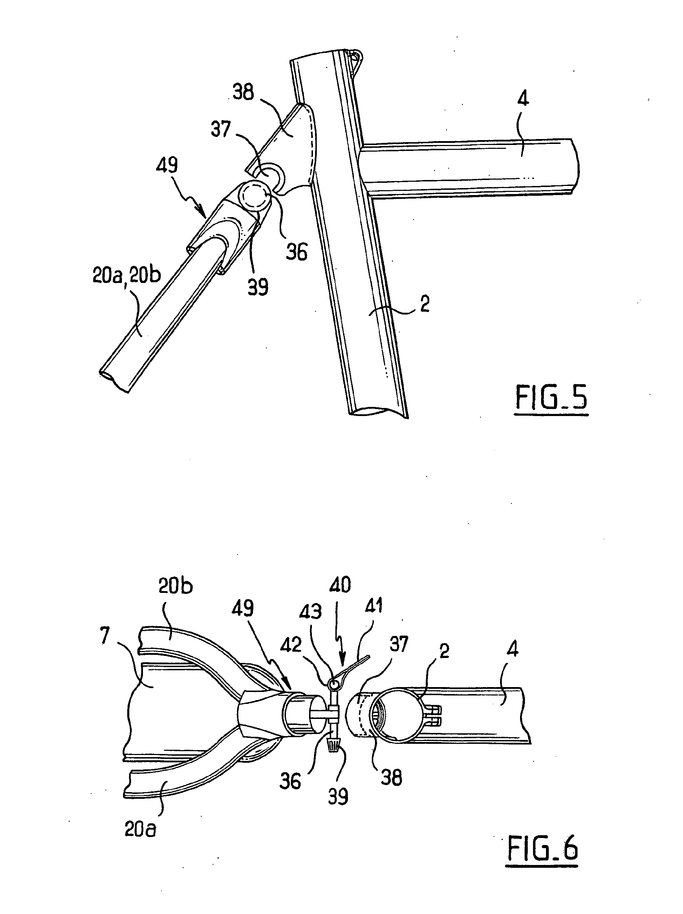

Selon une seconde variante d'exécution de la bicyclette conforme à l'invention, en référence aux figures 5 et 6, l'extrémité proximale des bras obliques arrières 20a, 20b est munie d'un axe 36 s'étendant perpendiculairement auxdits bras obliques arrières 20a, 20b, c'est-à-dire perpendiculairement au plan sagittal du cadre 1, formant un tirant apte à coopérer avec une gorge 37 de section en forme de U formée à l'extrémité libre d'une patte 38 s'étendant depuis le tube de selle 2 vers l'arrière et comprenant à ses extrémités libres respectivement un écrou 39 et des moyens de serrage et de traction 40 sous tension dudit tirant 36 afin de bloquer ledit tirant 36 dans la gorge 37.

Il est bien évident que la gorge 37 peut être substituée par deux encoches en forme de U pratiquées à l'extrémité libre d'au moins deux pattes parallèles s'étendant depuis le tube de selle 2 vers l'arrière de la bicyclette.

Lesdits moyens de serrage et de traction 40 sont constitués d'une manette 41 dont la tête cylindrique 42 est montée en rotation autour d'un axe 42 excentrique perpendiculaire à l'axe longitudinal du tirant 36 et coopérant avec les flancs de la patte 38.

Selon une troisième variante d'exécution de la bicyclette conforme à l'invention, non représentée sur les figures, l'extrémité proximale des bras obliques arrières 20a, 20b est munie d'une gorge de section en forme de U dont l'axe longitudinal s'étend perpendiculairement aux bras obliques arrières 20a, 20b, c'est-à-dire perpendiculairement au plan sagittal du cadre 1, et apte à recevoir un axe solidaire du cadre 1 et s'étendant perpendiculairement au plan sagittal de ce dernier, ledit axe formant un tirant qui comprend à ses extrémités libres respectivement un écrou et des moyens de serrage et de traction sous tension dudit tirant afin de bloquer le tirant dans la gorge. Lesdits moyens de serrage et de traction sont alors constitués d'une manette dont la tête cylindrique est montée en rotation autour d'un axe excentrique perpendiculaire à l'axe longitudinal du tirant et coopérant avec les flancs des bras obliques arrières 20a, 20b.

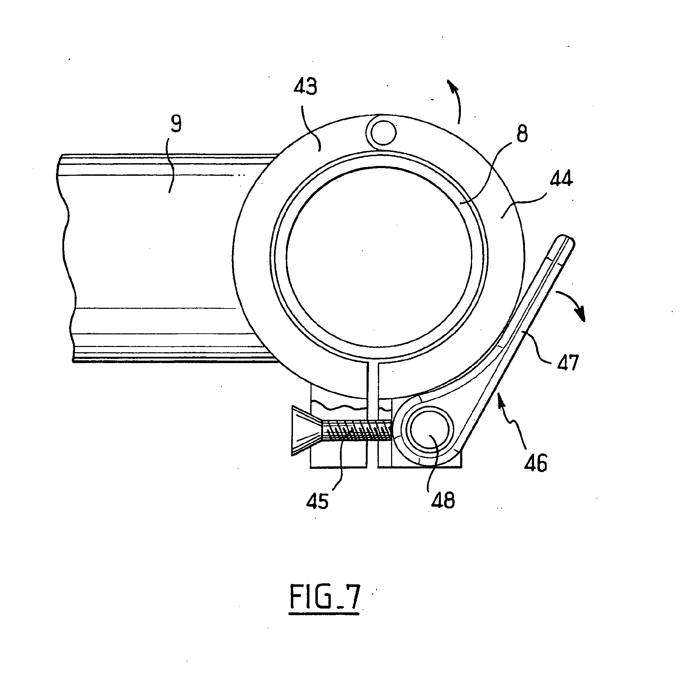

En référence aux figures 1 et 7, le guidon 8 est fixé de manière amovible à l'extrémité libre de la potence 9 solidaire de la fourche 5 par des moyens de fixation. Lesdits moyens de fixation sont constitués d'un mors fixe hémi-cylindrique 43 solidaire de l'extrémité libre de la potence 9 et d'un mors mobile hémi-cylindrique 44 articulé au mors fixe 43, lesdits moyens de fixation comportant des moyens de blocage du mors fixe 43 par rapport au mors mobile 44 pour assurer le serrage du guidon 8 entre les mors fixe 43 et mobile 44**.** Ces moyens de blocage sont constitués d'un tirant 45 apte à venir en prise avec l'extrémité libre du mors fixe 43 et coopérant avec des moyens de serrage et de traction 46 sous tension dudit tirant 45 afin d'exercer une pression du mors mobile 44 sur le guidon placé entre les mors fixe 43 et mobile 44. Ces moyens de serrage et de traction 46 sont constitués d'une manette 47 montée en rotation autour d'un axe 48 parallèle à l'axe des mors 43 et 44, ledit tirant 45 étant solidaire de la manette 47. On notera que de tels moyens de fixation du guidon, ou de tout autre moyen de direction, permet de fixer ou de retirer le guidon sans utiliser de pièce de fixation libre que le cycliste pourrait égarer lors du pliage ou du dépliage de la bicyclette.

Il est bien évident que le mors mobile 44 peut être articulé à l'extrémité libre de la potence 9 sans pour autant sortir du cadre de l'invention.

Par ailleurs, en référence à la figure 1, les bras obliques arrières 20a,20b du bras arrière 15 concourent en un segment de tube unique 49 à proximité de leurs extrémités distales, ledit segment de tube unique 49 étant muni des moyens de solidarisation des bras obliques arrières 20a,20b au tube de selle 2. De manière particulièrement avantageuse, le bras arrière 15 comporte un amortisseur 50, ou tout autre moyen d'amortissement équivalent bien connu de l'homme de l'art, positionné entre l'axe du moyeu de la roue arrière 16 et les moyens de solidarisation des bras obliques arrières 20a,20b au tube de selle 2, et plus précisément positionné au niveau du segment de tube unique 49.

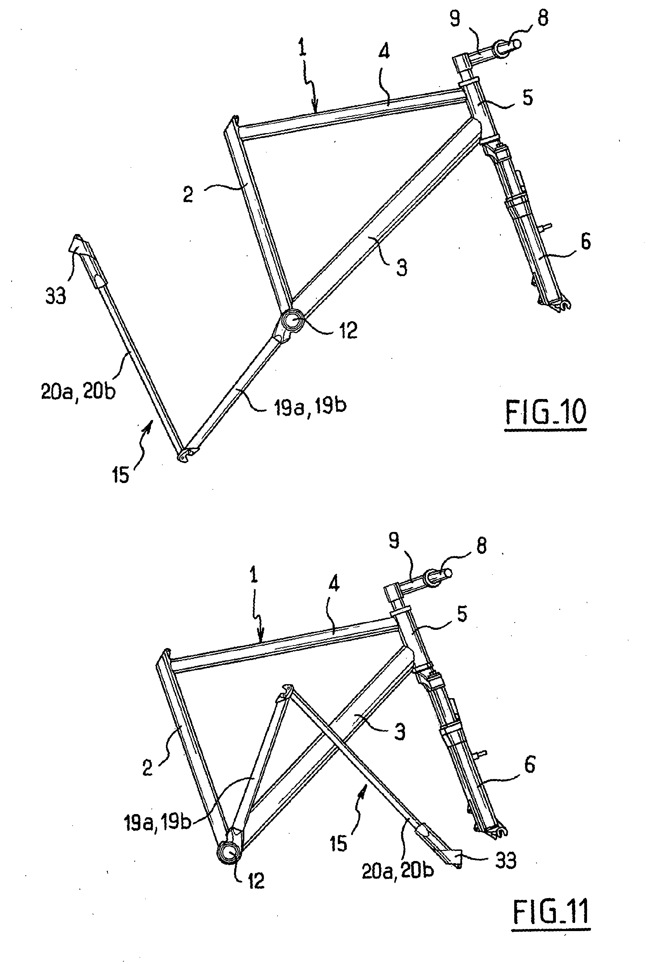

On décrira maintenant, en référence aux figures 1 et 8 à 13, les différentes étapes de pliage de la bicyclette conforme à l'invention.

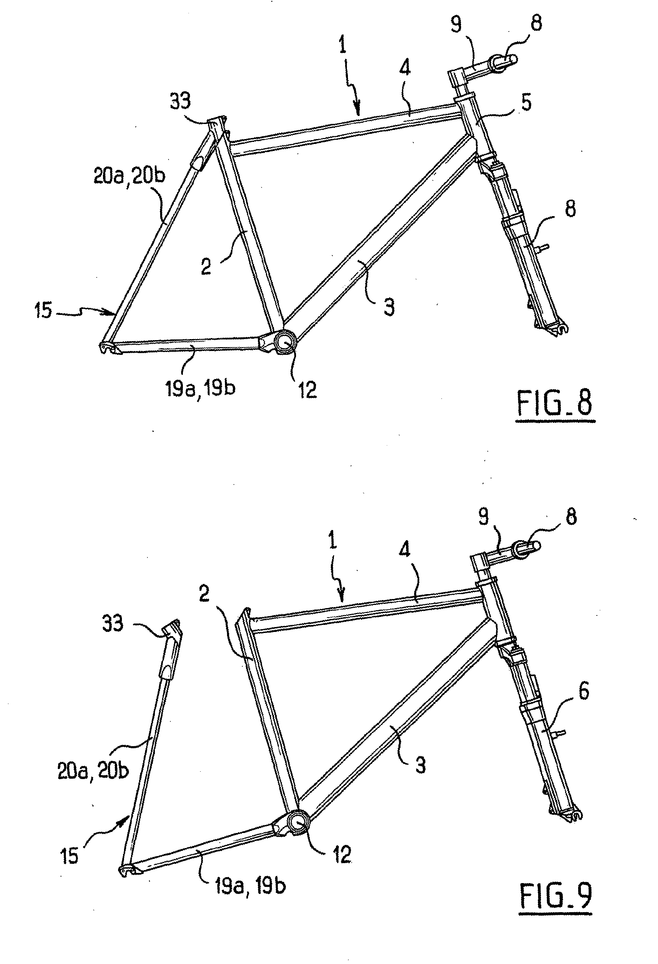

En référence aux figures 1 et 8, les roues avant 7 et arrière 16 sont préalablement retirées, puis la tige de selle 11 est retirée du tube de selle 2 et de la section de tube 33 solidaire des bras obliques arrières 20a, 20b afin de libérer le bras arrière 15 qui est désormais libre en rotation autour du boîtier de pédalier 12. Le bras arrière 15 est alors entraîné en rotation, en référence aux figures 9 à 11, autour dudit boîtier de pédalier 12 jusqu'à ce que l'extrémité distale des bras horizontaux 19a,19b du bras arrière 15 s'étende entre les tubes oblique 3 et horizontal 4 du cadre 1 et les moyens de solidarisation des bras obliques arrières 20a,20b, c'est-à-dire la section de tube 33, s'étendent entre le tube oblique 3 du cadre 1 et une droite passant par le boîtier de pédalier 12 et l'extrémité inférieure de la fourche 5. Après la rotation du bras arrière 15, la tige de selle 11 peut être réintroduite dans le tube de selle 2.

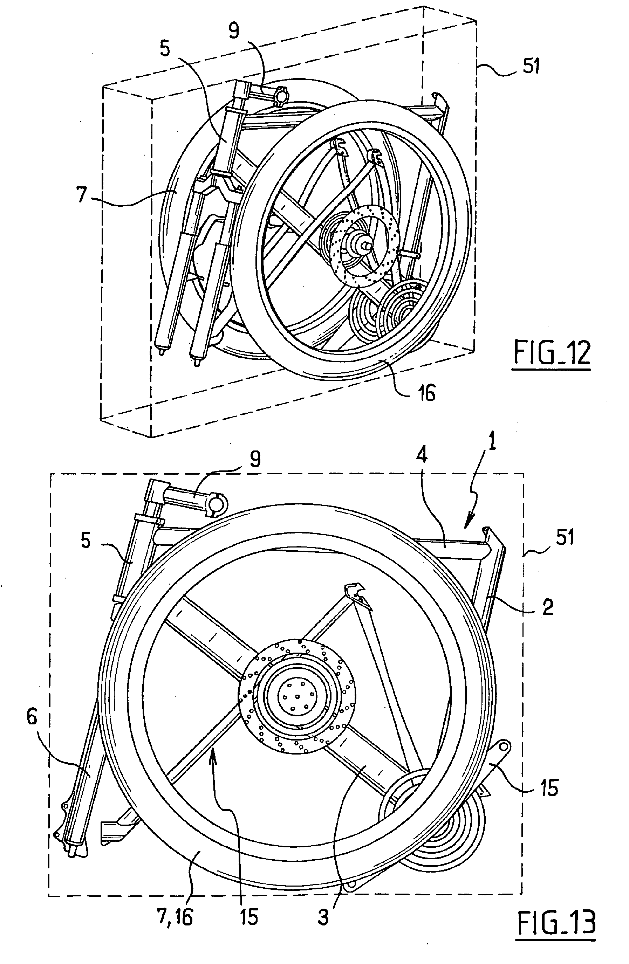

Après avoir retiré le guidon 8 et placé les roues avant 7 et arrière 16 respectivement de part et d'autre du cadre 1, en référence aux figures 12 et 13, la bicyclette repliée est apte à tenir dans un sac 51 définissant un volume inscrit dans un parallélépipède. Ce sac 51 est obtenu dans une matière semi-rigide et présente d'une part une longueur et une hauteur interne tout juste supérieure au diamètre des roues avant 7 et arrière 16 et d'autre part une profondeur interne tout juste supérieure à la somme des épaisseurs du cadre 1 et des roues avant 7 et arrière 16. A titre d'exemple non limitatif, pour une bicyclette dont les roues présentent un diamètre de 675mm, le sac présente une longueur d'environ 800mm, une hauteur d'environ 800mm et une épaisseur d'environ 450mm. Le sac 51 présente une longueur et une hauteur comprise entre 1,1 et 1,3 fois le diamètre des roues 7,16, et de préférence 1,18 et 1,2 fois le diamètre des roues 7,16 de ladite bicyclette, et une profondeur comprise entre 440 et 460 mm.

En référence aux figures 13 à 15, le sac 51 est constitué d'une base 52 rectangulaire comportant le long de l'un de ses bords latéraux des roulettes 53 faisant saillie sous la face inférieure de la base 52 et le long de son bord latéral opposé de moyens de préhensions télescopiques 54. Ces moyens de préhensions télescopiques 54 consistent en une poignée 55 s'étendant aux extrémités libres de deux bras tubulaires 56 parallèles aptes à coulisser dans des fourreaux 57 pratiqués dans la base 52. Lesdits bras 56 sont aptes à être déplacés depuis une position rétractée où les bras 56 s'étendent intégralement dans les fourreaux 57 et la poignée 55 s'étend le long du bord latéral de ladite base 52 jusqu'à une position active où lesdits bras 56 font saillies des fourreaux 57 et inversement.

Par ailleurs, le sac 51 est constitué de deux coques 58 respectivement articulées autour d'une charnière le long des bords longitudinaux de la base 52, au niveau de la face supérieure de ladite base 52, chaque coque 58 comportant des moyens de fermeture et des moyens de fermeture complémentaires, de telle manière que lesdites coques 58 forment un volume globalement parallélépipédique en position fermée.

Il va de soi que lesdites coques 58 peuvent être articulées le long des bords latéraux de la base 52 sans pour autant sortir du cadre de l'invention.

Par ailleurs, il est bien évident que le sac 51 peut être constitué d'une base 52 et une ou plusieurs coques 58 apte à coopérer avec ladite base 52 de telle sorte que la ou les coques et la base 52 forment un volume globalement parallélépipédique en position fermée.

Ces coques 58 semi-rigides sont, par exemple, des coques thermo-moulées.

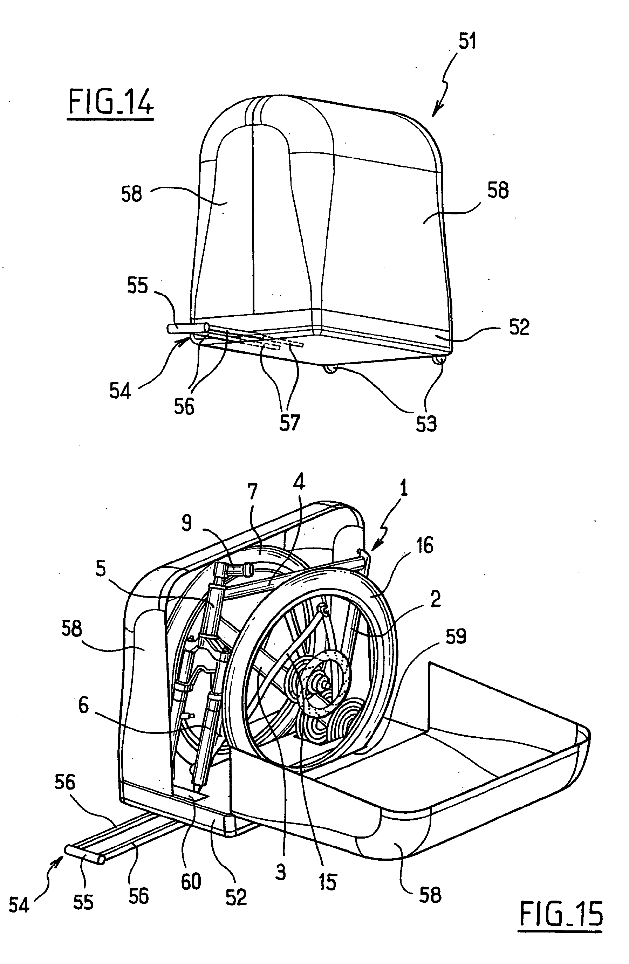

En référence aux figures 14 et 15, la face supérieure de la base 52 comporte deux évidements parallélépipédiques 59 s'étendant parallèlement le long des bords longitudinaux de la base 52, de part et d'autre du plan de symétrie sagittal de la base 52. Ces évidements 59 sont aptes à recevoir les roues avant 7 et arrière 16 lors de leur rangement dans le sac 51. La face supérieure de la base 52 comporte par ailleurs deux autres évidements parallélépipédiques dits latéraux 60 s'étendant globalement dans le plan sagittal de la base 52, s'étendant respectivement à proximité des bords latéraux de ladite base 52, et aptes à recevoir respectivement les pignons du boîtier de pédalier du vélo et l'extrémité inférieure de la fourche dudit vélo.

Ces évidements 59 et 60 permettent de maintenir en position les différents éléments du vélo, à savoir le cadre et les roues, lors de son transport.

Il va de soi que le bras arrière 15 peut être articulé au cadre 1 par tout moyen approprié, les bras dit obliques arrières 20a,20b du bras arrière 15 pouvant, par exemple, être solidarisés de manière amovible au tube dit horizontal 4 du cadre 1.

Enfin, il est bien évident que la bicyclette pliable suivant l'invention pourra être adaptée pour un vélo de route, la fourche télescopique étant alors substituée par une fourche rigide et l'amortisseur 50 retiré, et que les exemples que l'on vient de donner ne sont que de illustrations particulières en aucun cas limitatives quant aux domaines d'application de l'invention.

## Revendications

1. Bicyclette pliable du type comportant d'une part un châssis dit cadre (1) portant un boîtier de pédalier (12) et un tube de fourche (5) portant une fourche (6) à l'extrémité inférieure de laquelle est solidarisé l'axe de la roue avant (7) de direction et à l'extrémité supérieure de laquelle sont solidarisés des moyens de direction (8,9), et d'autre part un bras arrière (15) solidaire du cadre (1) et portant l'axe du moyeu d'une roue arrière motrice (16), d'un diamètre supérieur ou égal à 650 mm, le couple moteur étant transmis à la roue motrice (16) par une chaîne (17) s'étendant entre un pignon menant (13) solidaire du cadre (1) et un pignon mené (18) solidaire de l'axe du moyeu de la roue motrice (16), ; le bras arrière (15) étant constitué d'au moins deux bras dits horizontaux (19a,19b) dont l'une des extrémités dite proximale est articulée au cadre et dont l'autre extrémité dite distale, portant l'axe du moyeu de la roue arrière motrice (16), est solidaire de l'une des extrémités de deux bras dits obliques arrières (20a,20b), l'autre extrémité dite proximale desdits bras obliques arrières (20a,20b) étant munie de moyens de solidarisation mâles ou femelles aptes à coopérer avec des moyens de solidarisation femelles ou respectivement mâles du tube de selle (2) ou du tube horizontal (4) de manière à ce qu'un utilisateur puisse solidariser ou désolidariser le bras arrière (15) du cadre (1),
**caractérisé en ce que** ledit bras arrière (15) est articulé au cadre (1) de telle manière qu'il soit apte à pivoter jusqu'à ce que l'extrémité distale des bras horizontaux (19a,19b) du bras arrière (15) s'étende entre les tubes oblique (3) et horizontal (4) du cadre (1) et les moyens de solidarisation des bras obliques arrières (20a,20b), s'étendent entre le tube oblique (3) du cadre (1) et une droite passant par le boîtier de pédalier (12) et l'extrémité inférieure de la fourche (5) et **en ce que** les moyens de solidarisation consistent d'une part dans un axe formant tirant (36) comprenant à ses extrémités libres respectivement un écrou (39) et des moyens de serrage et de traction (40) sous tension dudit tirant (36) et d'autre part dans une gorge (37) de section en forme de U.

2. Bicyclette pliable suivant la revendication 1, **caractérisée en ce que** le cadre (1) consiste en un cadre triangulaire constitué d'un tube dit de selle (2), d'un tube oblique (3) et d'un tube horizontal (4), les extrémités du tube oblique (3) et du tube horizontal (4) étant solidaires respectivement du tube de selle (2) et du tube de fourche (5).

3. Bicyclette pliable suivant l'une quelconque des revendications 1 ou 2,
**caractérisée en ce que** le tirant (36) consiste en un axe solidaire de l'extrémité proximale des bras obliques arrières (20a,20b) et s'étendant perpendiculairement auxdits bras obliques arrières (20a,20b), c'est-à-dire perpendiculairement au plan sagittal du cadre (1), ledit tirant (36) étant apte à coopérer avec la gorge (37) de section en forme de U formée à l'extrémité libre d'une patte (38) s'étendant depuis le tube de selle (2) vers l'arrière.

4. Bicyclette suivant l'une quelconque des revendications 1 ou 2, **caractérisée en ce que** la gorge(37) de section en forme du U est formée à l'extrémité proximale des bras obliques arrières (20a,20b) de telle manière que l'axe longitudinal de ladite gorge (37) s'étende perpendiculairement auxdits bras obliques arrières (20a,20b), c'est-à-dire perpendiculairement au plan sagittal du cadre (1), ladite gorge (37) étant apte à recevoir l'axe du tirant (36) qui est solidaire du cadre (1) et qui s'étend perpendiculairement au plan sagittal

5. Bicyclette pliable suivant l'une quelconque des revendications 3 ou 4,
**caractérisée en ce que** les moyens de serrage et de traction (40) sont constitués d'une manette (41) montée en rotation autour d'un axe (43) perpendiculaire à l'axe longitudinal du tirant (36) et coopérant avec les flancs de la patte (38) ou de l'extrémité proximale des bras obliques arrières (20a,20b).

6. Bicyclette pliable suivant l'une quelconque des revendications 1 à 5,
**caractérisée en ce que** les bras horizontaux (19a,19b) du bras arrière (15) sont montés pivotant autour de l'axe du boîtier de pédalier (12), ledit boîtier de pédalier (12) portant l'axe du pignon menant (13).

7. Bicyclette pliable suivant la revendication 6, **caractérisée en ce que** chaque bras horizontal (19a,19b) du bras arrière (15) comporte des moyens d'articulation constitués d'un mors fixe (22) hémi-annulaire à l'extrémité libre duquel est articulé un mors mobile (23) hémi-annulaire muni de moyens de fixation (24) dudit mors mobile (23) au mors fixe (22).

8. Bicyclette pliable suivant la revendication 6, **caractérisé en ce que** chaque mors fixe (22) annulaire comporte une cheville (26) sur laquelle est apte à venir s'emboîter le bras horizontal (19a,19b) du bras arrière (15).

9. Bicyclette pliable suivant l'une quelconque des revendications 6 à 8,
**caractérisée en ce qu'**elle comporte deux roulements annulaires (32) s'étendant respectivement de part et d'autre du cadre (1) sur le boîtier de pédalier (12) cylindrique qui fait saillie de part et d'autre du cadre (1), les mors fixes (22) et mobiles (23) des moyens d'articulation étant solidarisés par serrage auxdits roulement annulaires (32).

10. Bicyclette pliable suivant l'une quelconque des revendications précédentes,
**caractérisée en ce que** les moyens de direction (8) sont solidarisés à la fourche (6) par des moyens de fixation constitués d'un mors fixe (43) hémi-cylindrique solidaire de la fourche (6) et d'un mors mobile (44) hémi-cylindrique articulé à la fourche (6) ou au mors fixe (43), lesdits moyens de fixation comportant des moyens de blocage du mors mobile (44) par rapport au mors fixe (43) pour assurer le serrage des moyens de direction (8) entre les mors fixe (43) et mobile (44).

11. Bicyclette pliable suivant la revendication 10, **caractérisée en ce que** les moyens de blocage sont constitués d'un tirant (45) apte à venir en prise avec l'extrémité libre du mors fixe (43) et coopérant avec des moyens de serrage et de traction (46) sous tension dudit tirant (45) afin d'exercer une pression du mors mobile (44) sur les moyens de direction (8) placés entre les mors fixe (43) et mobile (44).

12. Bicyclette pliable suivant la revendication 11, **caractérisée en ce que** les moyens de serrage et de traction (46) sont constitués d'une manette (47) montée en rotation autour d'un axe (48) parallèle à l'axe longitudinal des mors (43,44), ledit tirant (45) étant solidaire de la manette (47).

13. Bicyclette pliable suivant l'une quelconque des revendications précédentes,
**caractérisée en ce que** le bras arrière (15) comporte un moyen d'amortissement (50) positionné entre l'axe du moyeu de la roue arrière (7) et les moyens de solidarisation des bras obliques arrières (20a,20b) au cadre (1).

14. Bicyclette pliable suivant l'une quelconque des revendications précédentes,
**caractérisée en ce que** les bras obliques arrières (20a,20b) concourent en un segment de tube unique (49) à proximité de leurs extrémités distales, ledit segment de tube unique (49) étant muni des moyens de solidarisation des bras obliques arrières (20a,20b) au cadre (1).

15. Bicyclette pliable suivant l'une quelconque des revendications précédentes avec un sac (51) apte à recevoir ladite bicyclette pliée et définissant un volume intérieur inscrit dans un parallélépipède présentant une longueur et une hauteur comprise entre 1,1 et 1,3 fois le diamètre des roues (7,16) de ladite bicyclette, et de préférence entre 1,18 et 1,2 fois le diamètre des roues (7,16).

16. Bicyclette pliable suivant la revendication 15 , **caractérisé en ce que** le sac (51) présente une longueur et une hauteur comprise entre 1,1 et 1,3 fois le diamètre des roues (7,16) de ladite bicyclette, et de préférence entre 1,18 et 1,2 fois le diamètre des roues (7,16).

17. Bicyclette pliable suivant la revendication 16, **caractérisé en ce que** le sac présente une profondeur comprise entre 440 et 460mm.

18. Bicyclette pliable suivant l'une quelconque des revendications 16 ou 17,
**caractérisé en ce que** le sac est obtenu dans un matériau semi-rigide.

19. Bicyclette pliable suivant l'une quelconque des revendications 16 à 18,
**caractérisé en ce que** le sac est constitué d'une base (52) et d'au moins une coque (58) apte à coopérer avec ladite base (52) de telle sorte que la coque (58) et la base (52) forment un volume globalement parallélépipédique en position fermée.

20. Bicyclette pliable suivant la revendication 19, **caractérisé en ce que** le sac est constitué d'une base (52) et de deux coques (58) respectivement articulées le long de deux bords opposés de la base (52), chaque coque (58) comportant des moyens de fermeture et des moyens de fermeture complémentaires, de telle manière que lesdites coques (58) forment un volume globalement parallélépipédique en position fermées.

21. Bicyclette pliable suivant la revendication 20, **caractérisé en ce que** la face supérieure de la base (52) présentant une forme rectangulaire comporte d'une part deux évidements parallélépipédiques (59) s'étendant parallèlement le long des bords longitudinaux de la base (52), de part et d'autre du plan de symétrie sagittal de la base (52), lesdits évidements (59) étant aptes à recevoir les roues avant (7) et arrière (16) lors de leur rangement dans le sac (51), et d'autre part, deux autres évidements parallélépipédiques dits latéraux (60) s'étendant globalement dans le plan sagittal de la base (52), respectivement à proximité des bords latéraux de ladite base (52), et aptes à recevoir respectivement les pignons du boîtier de pédalier du vélo et l'extrémité inférieure de la fourche dudit vélo.

## Claims

1. Folding bicycle of the type comprising firstly a chassis, a so-called frame (1), supporting a pedal mechanism (12) and a fork tube (5) supporting a fork (6) at the lower end of which the axle of the front wheel (7) is fixed integrally and at the upper end of which steering means (8, 9) are fixed integrally and secondly a rear arm (15) integral with the frame (1) and supporting the axle of the hub of a motorised rear wheel (16), of a diameter greater than or equal to 650 mm, the engine torque being transmitted to the motorised wheel (16) by a chain (17) extending between a driving pinion (13) integral with the frame (1) and a driven pinion (18) integral with the axle of the hub of the motorised wheel (16); the rear arm (15) being constituted by at least two so-called horizontal arms (19a, 19b), of which one of the ends, the so-called proximal end, is articulated to the frame and of which the other, so-called distal end, supporting the axle of the hub of the rear motorised wheel (16), is integral with one of the ends of two so-called rear oblique arms (20a, 20b), the other, so-called proximal end of said rear oblique arms (20a, 20b) being equipped with male or female fixing means adapted to cooperate with female or male fixing means of the saddle tube (2) or of the horizontal tube (4) in such a way that a user can connect or disconnect the rear arm (15) to or from the frame (1),
**characterised in that** said rear arm (15) is articulated to the frame (1) in such a way that it can rotate until the distal end of the horizontal arms (19a, 19b) of the rear arm (15) extends between the oblique tube (3) and horizontal tube (4) of the frame (1) and the fixing means of the rear oblique arms (20a, 20b) extend between the oblique tube (3) of the frame (1) and a straight line passing via the pedal mechanism (12) and the lower end of the fork (5) and **in that** the fixing means consist firstly of an axle forming a tie rod (36) comprising at its free ends respectively a nut (39) and locking and traction means (40) under tension of said tie rod (36) and secondly of a groove (37) with a U-shaped cross-section.

2. Folding bicycle according to claim 1,
**characterised in that** the frame (1) consists of a triangular frame constituted by a so-called saddle tube (2), an oblique tube (3) and a horizontal tube (4), the ends of the oblique tube (3) and of the horizontal tube (4) being respectively integral with the saddle tube (2) and the fork tube (5).

3. Folding bicycle according to any one of the claims 1 or 2, **characterised in that** the tie rod (36) consists of an axle integral with the proximal end of the rear oblique arms (20a, 20b) and extending perpendicular to said rear oblique arms (20a, 20b), that is to say perpendicular to the sagittal plane of the frame (1), said tie rod (36) being adapted to cooperate with the groove (37) with a U-shaped cross-section formed at the free end of a lug (38) extending from the saddle tube (2) towards the rear.

4. Folding bicycle according to any one of the claims 1 or 2, **characterised in that** the groove (37) with a U-shaped cross-section is formed at the proximal end of the rear oblique arms (20a, 20b) in such a way that the longitudinal axis of said groove (37) extends perpendicular to said rear oblique arms (20a, 20b), that is to say perpendicular to the sagittal plane of the frame (1), said groove (37) being adapted to receive the axle of the tie rod (36) which is integral with the frame (1) and which extends perpendicular to the sagittal plane.

5. Folding bicycle according to any one of the claims 3 or 4, **characterised in that** the locking and traction means (40) are constituted by a lever (41) mounted in rotation about an axis (43) perpendicular to the longitudinal axis of the tie rod (36) and cooperating with the flanks of the lug (38) or of the proximal end of the rear oblique arms (20a, 20b).

6. Folding bicycle according to any one of the claims 1 to 5, **characterised in that** the horizontal arms (19a, 19b) of the rear arm (15) are mounted so as to pivot about the axis of the pedal mechanism (12), said pedal mechanism (12) supporting the axle of the driving pinion (3).

7. Folding bicycle according to claim 6,
**characterised in that** each horizontal arm (19a, 19b) of the rear arm (15) comprises articulation means constituted by a semi-annular fixed jaw (22) at the free end of which a semi-annular mobile jaw (23) is articulated which is equipped with fixing means (24) of said mobile jaw (23) to the fixed jaw (22).

8. Folding bicycle according to claim 6,
**characterised in that** each annular fixed jaw (22) comprises a pin (26) on which the horizontal arm (19a, 19b) of the rear arm (15) fits.

9. Folding bicycle according to any one of the claims 6 to 8, **characterised in that** it comprises two annular bearings (32) extending respectively on either side of the frame (1) on the cylindrical pedal mechanism (12) which projects on either side of the frame (1), the fixed jaws (22) and mobile jaws (23) of the articulation means being integrally fixed by locking to said annular bearings (32).

10. Folding bicycle according to any one of the preceding claims, **characterised in that** the steering means (8) are fixed integrally with the fork (6) by fixing means constituted by a semi-cylindrical fixed jaw (43) integral with the fork (6) and a semi-cylindrical mobile jaw (44) which is articulated to the fork (6) or to the fixed jaw (43), said fixing means comprising means for locking the mobile jaw (44) in relation to the fixed jaw (43) in order to ensure the locking of the steering means (8) between the fixed jaw (43) and the mobile jaw (44).

11. Folding bicycle according to claim 10,
**characterised in that** the locking means are constituted by a tie rod (45) which is adapted to engage with the free end of the fixed jaw (43) and cooperating with locking and traction means (46) under tension of said tie rod (45) in order to exert a pressure of the mobile jaw (44) on the steering means (8) placed between the fixed jaw (43) and the mobile jaw (44).

12. Folding bicycle according to claim 11,
**characterised in that** the locking and traction means (46) are constituted by a lever (47) mounted in rotation about an axis parallel to the longitudinal axis of the jaws (43, 44), said tie rod (45) being integral with the handle (47).

13. Folding bicycle according to any one of the preceding claims, **characterised in that** the rear arm (15) comprises damping means (50) positioned between the axle of the hub of the rear wheel (7) and the fixing means of the rear oblique arms (20a, 20b) to the frame (1).

14. Folding bicycle according to any one of the preceding claims, **characterised in that** the rear oblique arms (20a, 2ob) converge into a single tube segment (49) close to their distal ends, said single tube segment (49) being equipped with fixing means of the rear oblique arms (20a, 20b) to the frame (1).

15. Folding bicycle according to any one of the preceding claims with a bag (51) adapted to receive said folded bicycle and defining an internal volume within a parallelepiped having a length and a height between 1.1 and 1.3 times the diameter of the wheels (7, 16) of said bicycle and preferably between 1.18 and 1.2 times the diameter of the wheels (7, 16).

16. Folding bicycle according to claim 15,
**characterised in that** the bag (51) has a length and a height between 1.1 and 1.3 times the diameter of the wheels (7, 16) of said bicycle and preferably between 1.18 and 1.2 times the diameter of the wheels (7, 16).

17. Folding bicycle according to claim 16,
**characterised in that** the bag has a depth between 440 and 460 mm.

18. Folding bicycle according to any one of claims 16 or 17, **characterised in that** the bag is made of a semirigid material.

19. Folding bicycle according to any one of the claims 16 to 18, **characterised in that** the bag is constituted by a base (52) and at least one shell (58) which can cooperate with said base (52) in such a way that the shell (58) and the base (52) form a globally parallelepiped volume in the closed position.

20. Folding bicycle according to claim 19,
**characterised in that** the bag is constituted by a base (52) and two shells (58) respectively articulated along two opposite edges of the base (52), each shell (58) comprising closing means and complementary closing means in such a way that said shells (58) form a globally parallelepiped volume in the closed position.

21. Folding bicycle according to claim 20, **characterised in that** the upper face of the base (52) having a rectangular form comprises firstly two parallelepiped recesses (59) extending in parallel along the longitudinal edges of the base (52) on each side of the sagittal symmetry plane of the base (52), said recesses (59) being able to receive the front wheel (7) and rear wheel (16) when they are arranged in the bag (51) and secondly two other, so-called lateral parallelepiped recesses (60) extending globally in the sagittal plane of the base (52), respectively in proximity to the lateral edges of said base (52) and able to receive respectively the pinions of the pedal mechanism of the bicycle and the lower end of the fork of said bicycle.

## Patentansprüche

1. Klappzweirad der Art, die einerseits ein Fahrgestell, das als Rahmen (1) bezeichnet wird und ein Tretlagergehäuse (12) und ein Gabelschaftrohr (5) trägt, das eine Gabel (6) trägt, an deren unterem Ende die Achse des gelenkten Vorderrads (7) fest angebracht ist und an deren oberem Ende Lenkmittel (8, 9) fest verbunden sind, und andererseits einen hinteren Arm (15) umfasst, der fest mit dem Rahmen (1) verbunden ist und die Achse der Nabe eines angetriebenen Hinterrads (16) mit einem Durchmesser von größer oder gleich 650 mm trägt, wobei das Drehmoment über eine Kette (17) an das angetriebene Rad (16) übertragen wird, die sich zwischen einem fest mit dem Rahmen (1) verbundenen Antriebsritzel (13) und einem fest mit der Achse der Nabe des angetriebenen Rads (16) verbundenen angetriebenen Ritzel (18) erstreckt, wobei der hintere Arm (15) aus mindestens zwei so genannten horizontalen Armen (19a, 19b) besteht, bei denen eines der Enden, das so genannte proximale, am Rahmen angelenkt ist, und bei denen das andere, so genannte distale Ende, das die Achse der Nabe des angetriebenen Hinterrads (16) trägt, fest mit einem der Enden der beiden Arme, der so genannten schrägen hinteren Arme (20a, 20b) verbunden ist, wobei das andere, so genannte proximale Ende der schrägen hinteren Arme (20a, 20b) mit Steck- oder Aufnahmebefestigungsmitteln versehen ist, die geeignet sind, mit Aufnahme- bzw. Steckbefestigungsmitteln des Sitzrohrs (2) oder des horizontalen Rohrs (4) so zusammenzuwirken, dass ein Benutzer den hinteren Arm (15) mit dem Rahmen (1) fest verbinden oder davon trennen kann, **dadurch gekennzeichnet, dass** der hintere Arm (15) so am Rahmen (1) angelenkt ist, dass er geeignet ist, so weit zu schwenken, bis sich das distale Ende der horizontalen Arme (19a, 19b) des hinteren Arms (15) zwischen dem schrägen (3) und dem horizontalen Rohr (4) des Rahmens (1) erstreckt und sich die Befestigungsmittel der schrägen hinteren Arme (20a, 20b) zwischen dem schrägen Rohr (3) des Rahmens (1) und einer durch das Tretlagergehäuse (12) und das untere Ende der Gabel (5) gehenden Geraden erstrecken, und dass die Befestigungsmittel einerseits aus einem eine Durchsteckschraube (36) bildenden Stift, der an seinen freien Enden jeweils eine Mutter (39) und Mittel (40) zum festklemmen und Anziehen unter Spannung der Durchsteckschraube (36) umfasst und andererseits aus einer im Schnitt U-förmigen Kehle (37) bestehen.

2. Klappzweirad nach Anspruch 1, **dadurch gekennzeichnet, dass** der Rahmen (1) aus einem dreieckigen Rahmen besteht, der aus einem so genannten Sitzrohr (2), einem schrägen Rohr (3) und einem horizontalen Rohr (4) besteht, wobei die Enden des schrägen Rohrs (3) und des horizontalen Rohrs (4) jeweils fest mit dem Sitzrohr (2) und dem Gabelschaftrohr (5) verbunden sind.

3. Klappzweirad nach Anspruch 1 oder 2, **dadurch gekennzeichnet, dass** die Durchsteckschraube (36) aus einem fest mit dem proximalen Ende der schrägen hinteren Arme (20a, 20b) verbundenen Stift besteht, der sich senkrecht zu den schrägen hinteren Armen (20a, 20b), d. h. senkrecht zur Sagittalebene des Rahmens (1) erstreckt, wobei die Durchsteckschraube (36) geeignet ist, mit der Kehle (37) mit U-förmigem Schnitt am freien Ende einer Nase (38) zusammenzuwirken, die sich vom Sitzrohr (2) nach hinten erstreckt.

4. Klappzweirad nach Anspruch 1 oder 2, **dadurch gekennzeichnet, dass** die Kehle (37) mit U-förmigem Schnitt so am proximalen Ende der schrägen hinteren Arme (20a, 20b) ausgebildet ist, dass sich die Längsachse der Kehle (37) senkrecht zu den schrägen hinteren Armen (20a, 20b), d. h. senkrecht zur Sagittalebene des Rahmens (1) erstreckt, wobei die Kehle (37) geeignet ist, den Stift der Durchsteckschraube (36) aufzunehmen, die fest mit dem Rahmen (1) verbunden ist und sich senkrecht zur Sagittalebene erstreckt.

5. Klappzweirad nach Anspruch 3 oder 4, **dadurch gekennzeichnet, dass** die Festklemm- und Anziehmittel (40) aus einem Griff (41) bestehen, der drehbar um einen senkrecht zur Längsachse der Durchsteckschraube (36) verlaufenden Stift (43) montiert ist und mit den Flanken der Nase (38) oder dem proximalen Ende der schrägen hinteren Arme (20a, 20b) zusammenwirkt.

6. Klappzweirad nach einem der Ansprüche 1 bis 5, **dadurch gekennzeichnet, dass** die horizontalen Arme (19a, 19b) des hinteren Arms (15) schwenkend um die Achse des Tretlagergehäuses (12) montiert sind, das die Achse des Antriebsritzels (13) trägt.

7. Klappzweirad nach Anspruch 6, **dadurch gekennzeichnet, dass** jeder horizontale Arm (19a, 19b) des hinteren Arms (15) Gelenkmittel umfasst, die aus einer feststehenden halbringförmigen Backe (22) bestehen, an deren freiem Ende eine bewegliche halbringförmige Backe (23) angelenkt ist, die mit Mitteln (24) zur Befestigung der beweglichen Backe (23) an der feststehenden Backe (22) versehen ist.

8. Klappzweirad nach Anspruch 6, **dadurch gekennzeichnet, dass** jede feststehende ringförmige Backe (22) einen Zapfen (26) umfasst, auf den sich der horizontale Arm (19a, 19b) des hinteren Arms (15) aufschiebt.

9. Klappzweirad nach einem der Ansprüche 6 bis 8**, dadurch gekennzeichnet, dass** es zwei ringförmige Lager (32) umfasst, die sich jeweils zu beiden Seiten des Rahmens (1) am zylindrischen Tretlagergehäuse (12) erstrecken, das zu beiden Seiten des Rahmens (1) vorsteht, wobei die feststehende Backe (22) und die bewegliche Backe (23) der Gelenkmittel durch Spannen an den ringförmigen Radlagern (32) befestigt werden.

10. Klappzweirad nach einem der vorhergehenden Ansprüche, **dadurch gekennzeichnet, dass** die Lenkmittel (8) über Fixierungsmittel an der Gabel (6) befestigt sind, wobei die Fixierungsmittel aus einer fest mit der Gabel (6) verbundenen feststehenden halbzylindrischen Backe (43) und einer an der Gabel (6) oder an der feststehenden Backe (43) angelenkten beweglichen halbzylindrischen Backe (44) bestehen und Mittel zur Blockierung der beweglichen Backe (44) bezüglich der feststehenden Backe (43) umfassen, um das Festklemmen der Lenkmittel (8) zwischen der feststehenden Backe (43) und der beweglichen Backe (44) zu gewährleisten.

11. Klappzweirad nach Anspruch 10, **dadurch gekennzeichnet, dass** die Blockiermittel aus einer Durchsteckschraube (45) bestehen, die geeignet ist, mit dem freien Ende der feststehenden Backe (43) in Eingriff zu kommen, und mit Mitteln (46) zum Festklemmen und Anziehen unter Spannung der Durchsteckschraube (45) zusammenwirkt, damit ein Druck der beweglichen Backe (44) auf die zwischen der feststehenden Backe (43) und der beweglichen Backe (44) platzierten Lenkmittel (8) ausgeübt werden kann.

12. Klappzweirad nach Anspruch 11, **dadurch gekennzeichnet, dass** die Festklemm- und Anziehmittel (46) aus einem Griff (47) bestehen, der drehbar um einen parallel zur Längsachse der Backen (43, 44) verlaufenden Stift (48) montiert ist, wobei die Durchsteckschraube (45) fest mit dem Griff (47) verbunden ist.

13. Klappzweirad nach einem der vorhergehenden Ansprüche, **dadurch gekennzeichnet, dass** der hintere Arm (15) ein Dämpfungsmittel (50) umfasst, das zwischen der Achse der Nabe des Hinterrads (16) und den Mitteln zur Befestigung der schrägen hinteren Arme (20a, 20b) am Rahmen (1) positioniert ist.

14. Klappzweirad nach einem der vorhergehenden Ansprüche, **dadurch gekennzeichnet, dass** die schrägen hinteren Arme (20a, 20b) in der Nähe ihrer distalen Enden in einem einzigen Rohrsegment (49) zusammenlaufen, das mit Mitteln zur Befestigung der schrägen hinteren Arme (20a, 20b) am Rahmen (1) versehen ist.

15. Klappzweirad nach einem der vorhergehenden Ansprüche, mit einer Tasche (51), die geeignet ist, das zusammengeklappte Zweirad aufzunehmen, und ein Innenvolumen definiert, das in einem Parallelepiped mit einer Länge und einer Höhe zwischen dem 1,1-und dem 1,3-Fachen des Durchmessers der Räder (7, 16) des Zweirads und vorzugsweise zwischen dem 1,18- und dem 1,2-Fachen des Durchmessers der Räder (7, 16) liegt.

16. Klappzweirad nach Anspruch 15, **dadurch gekennzeichnet, dass** die Tasche (51) eine Länge und eine Breite zwischen dem 1,1- und dem 1,3-Fachen des Durchmessers der Räder (7, 16) des Zweirads und vorzugsweise zwischen dem 1,18- und dem 1,2-Fachen des Durchmessers der Räder (7, 16) hat.

17. Klappzweirad nach Anspruch 16, **dadurch gekennzeichnet, dass** die Tasche eine Tiefe zwischen 440 und 460 mm hat.

18. Klappzweirad nach Anspruch 16 oder 17, **dadurch gekennzeichnet, dass** die Tasche aus einem halbstarren Material hergestellt ist.

19. Klappzweirad nach einem der Ansprüche 16 bis 18, **dadurch gekennzeichnet, dass** die Tasche aus einer Basis (52) und mindestens einer Schale (58) besteht, die geeignet ist, so mit der Basis (52) zusammenzuwirken, dass die Schale (58) und die Basis (52) in der geschlossenen Position ein allgemein parallelepipedes Volumen bilden.

20. Klappzweirad nach Anspruch 19, **dadurch gekennzeichnet, dass** die Tasche aus einer Basis (52) und aus zwei Schalen (58) besteht, die jeweils entlang von zwei gegenüberliegenden Rändern der Basis (52) angelenkt sind, wobei jede Schale (58) Verschlussmittel und komplementäre Verschlussmittel umfasst, so dass die Schalen (58) in der geschlossenen Position ein allgemein parallelepipedes Volumen bilden.

21. Klappzweirad nach Anspruch 20, **dadurch gekennzeichnet, dass** die obere Fläche der Basis (52), die eine rechteckige Form hat, einerseits zwei parallelepipede Ausnehmungen (59), die sich parallel entlang den Längsrändern der Basis (52) zu beiden Seiten der Sagittalsymmetrieebene der Basis (52) erstrecken, wobei die Ausnehmungen (59) geeignet sind, das Vorder- (7) und das Hinterrad (16) aufzunehmen, wenn diese in der Tasche (51) verstaut werden, und andererseits zwei andere parallelepipede, so genannte seitliche Ausnehmungen (60) umfasst, die sich allgemein in der Sagittalebene der Basis (52) jeweils in der Nähe der Seitenränder der Basis (52) erstrecken und geeignet sind, jeweils die Ritzel des Tretlagergehäuses des Fahrrads und das untere Ende der Gabel des Fahrrads aufzunehmen.
